# EUROPÄISCHE PATENTANMELDUNG

(11) **EP 2 818 421 A1**
(43) Veröffentlichungstag der Anmeldung: **31.12.2014**
(21) Anmeldenummer: 13173591.2
(22) Anmeldetag: 25.06.2013
(51) Int. Cl.: B65B 31/02, B65B 35/36, B65B 35/44, B65B 43/46, B65B 43/52, B65B 57/04, B65G 47/08, B65G 47/26, B65G 47/31, B65B 7/16

(54) **Schalenverschließmaschine mit Trayzuführung und Verfahren für eine Verpackungsanlage**

(71) Anmelder: Multivac Sepp Haggenmüller GmbH & Co. KG, 87787 Wolfertschwenden (DE)
(72) Erfinder: Buchenberg, Wolfgang, 87466 Oy-Mittelberg (DE)
(74) Vertreter: Grünecker, Kinkeldey, Stockmair & Schwanhäusser

(57) **Zusammenfassung**

Die Erfindung betrifft eine Schalenverschließmaschine mit Trayzuführung (3) zur Aufnahme von Trays (8) von einer kontinuierlich laufenden Kettenzuführung (2) und zum Gruppieren dieser Trays (8), wobei die Trayzuführung (3) wenigstens zwei Zugketten (12a, 12b) aufweist. Eine Gruppe G von Trays (8) wird anschließend mittels eines Greifersystems (17) an eine Siegelstation (5) einer Schalenverschließmaschine (4) übergeben

## Beschreibung

Die Erfindung bezieht sich auf eine Schalenverschließmaschine, auch Traysealer genannt, gemäß dem Oberbegriff des Anspruchs 1.

Aus der DE 102008030510 A1 ist ein Traysealer bekannt, der wenigstens zwei Zuführbänder umfasst, um für das Greifersystem eine Gruppe von Trays, auch als Schalen bezeichnet, mit entsprechenden Abständen zueinander zu bilden und zu positionieren, damit die Trays vom Greifersystem in die Siegelstation übergeben werden können. Üblicherweise werden die mit Produkt befüllten Trays den Zuführbändern von einer intermittierend arbeitenden Kettenzuführung bereitgestellt und in einem Start/Stop-Betrieb vom ersten stromaufwärts folgenden Zuführband, dem sogenannten Sammelband, der Schalenverschließmaschine aufgenommen. Alternativ können die Trays vor dem ersten Zuführband mittels eines Stoppers angehalten werden und als gepufferte aneinanderliegende Trays bereitgestellt werden. Eine intermittierend arbeitende Kettenzuführung, bei der die Trays manuell mit Produkten entlang der Transportstrecke gefüllt werden, ist nachteilig und nicht ergonomisch für das Bedienpersonal. Wesentlich besser ist bei manuellem Einlegen eine kontinuierlich laufende Kettenzuführung.

Eine Ausführung einer kontinuierlich betriebenen Trayzuführung ist in der noch nicht veröffentlichten EP 12006757 der Anmelderin selbst offenbart. Hier werden die Trays auf einer kontinuierlich laufenden Kettenzuführung in einem vorgegebenen Abstand zueinander den zwei Zuführbändern zur Übernahme und zum Gruppieren sowie Positionieren für das Greifersystem der Schalenverschließmaschine bereitgestellt. Die auf der Kettenzuführung transportierten Trays werden beispielsweise automatisch durch mit der Kettenzuführung mitlaufende Füller befüllt. Um den Zuführbändern eine verbesserte Gruppierung bei gleichzeitiger kontinuierlicher Bereitstellung der Trays zu ermöglichen, ist bereits auf der Kettenzuführung eine Lücke zwischen den Gruppen von Trays, die jeweils für das intermittierend arbeitenden Greifersystems vorteilhaft ist, vorgesehen, damit die Zuführbänder wenigstens für eine bestimmte Zeitspanne unabhängig von der Bereitstellung der Trays durch die Kettenzuführung die Gruppe der Trays an eine Position transportieren können, an der das Greifersystem diese vom zweiten Zuführband abnimmt und einer Siegelstation der Schalenverschließmaschine zuführt. Da immer nur eine vollzählige Gruppe in der Siegelstation verarbeitet bzw. eine Deckelfolie auf den Trayrand gesiegelt werden darf, ist sicherzustellen, dass auf der Kettenführung die definierte Aufteilung von Trays und Lücken eingehalten wird. Fehler können durch Prüfung mittels Sensoren auf Vorhandensein von Trays festgestellt werden, aber im Fehlerfall muss eine Korrektur vorgenommen werden und die Kettenzuführung angehalten werden. Fehler, die durch das Bedienpersonal ausgelöst werden, beispielsweise durch ein fehlendes Tray oder ein fälschlicherweise in die Lücke eingelegtes Tray führen zum Anhalten der Schalenverschließmaschine und in Folge auch der Kettenzuführung, welches eine Erhöhung der Stillstandszeiten bedeutet.

Aufgabe der vorliegenden Erfindung ist es, eine Schalenverschließmaschine mit einer Trayzuführung für eine kontinuierlich betriebene Kettenzuführung für eine Schalenverschließmaschine und ein Verfahren zum Betrieb einer solchen Trayzuführung zur Verfügung zu stellen, die die oben genannten Nachteile nicht mehr aufweist, so dass insbesondere eine Lücke zwischen Gruppen von Trays auf einer Kettenzuführung entfallen kann.

Diese Aufgabe wird gelöst durch eine Schalenverschließmaschine mit den Merkmalen des Anspruchs 1 bzw. durch ein Verfahren zum Betrieb einer Verpackungsanlage mit einer solchen Trayzuführung mit den Merkmalen des Anspruchs 10. Vorteilhafte Weiterbildungen der Erfindung sind in den Unteransprüchen angegeben.

Die erfindungsgemäße Trayzuführung zum Aufnehmen von Trays von einer kontinuierlich laufenden Kettenzuführung und zum Gruppieren dieser Trays ist dadurch gekennzeichnet, dass die Trayzuführung wenigstens eine erste und eine zweite Zugkette mit jeweils einem eigenen Antrieb und eigenen Schieberelementen aufweist. Somit sind die Zugketten getrennt voneinander betreibbar und ermöglichen ein Aufnehmen einer Gruppe von Trays von einer Kettenzuführung mittels einer ersten Zugkette und gleichzeitig ein davon unabhängiges Positionieren der Gruppe von Trays zum Weitertransport in eine Siegelstation durch ein Greifersystem einer Schalenverschließmaschine mittels einer zweiten Zugkette. Die an den Zugketten angebrachten Schieberelemente transportieren die Trays schiebend. Es entsteht der Vorteil, dass eine kontinuierlich laufende Kettenzuführung keine Lücke, wie sie aus dem genannten Stand der Technik bekannt ist, mehr aufweisen muss und auch nicht vorhandene bzw. fehlende Trays zu keinem Stillstand mehr und damit zu einer Reduzierung von Ausfallzeiten führen.

Eine Zugkette kann als eine einzelne Kette mit einseitig angebrachten Schieberelementen vorgesehen sein. Die Kette kann als eine Gliederkette, ein Zahnriemen oder dergleichen ausgeführt sein. Die Zugkette kann auch zwei parallel und gemeinsam angetriebene Ketten oder Riemen aufweisen, wobei die Schieberelemente dabei zwischen den Ketten angeordnet und mit ihren Enden an jeweils einer der zwei Ketten angebracht sind.

Der Begriff "Zugkette" (englisch: train chain) bedeutet im Kontext der Erfindung, dass eine solche Kette einen "Zug" von Schalen transportieren kann, d.h. eine Gruppe von Schalen mit einer bestimmten Anzahl, die hintereinander in Transportrichtung angeordnet sind. Die Länge des Zuges, also die Anzahl der hintereinander in einer Gruppe angeordneten Schalen, kann bspw. durch die Anzahl der mit der Zugkette verbundenen Schiebeelemente vorgegeben sein. Durch das Vorsehen von wenigstens zwei Zugketten mit jeweils einem eigenen Antrieb ermöglicht es die Erfindung, die Schalen aus einem kontinuierlichen Zustrom abzunehmen und einzelne "Züge" mit höherer Geschwindigkeit vom Übergabepunkt abfahren zu lassen, sobald sie komplettiert sind.

Sobald eine Zugkette am Ende der Trayzuführung von den von ihr transportierten Schalen befreit ist, kann sie ggf. mit hoher Geschwindigkeit wieder an den Übergabepunkt am Anfang der Trayzuführung zurückgefahren werden. Dort trifft die Zugkette vorzugsweise so rechtzeitig ein, dass sie auch ohne eine Verlangsamung des Zustroms von Schalen die nach dem Komplettieren einer anderen Zugkette übergebene, erste Schale wieder übernehmen kann.

Bevorzugt sind die Zugketten dazu konfiguriert, eine einzige Gruppe von Trays zu transportieren, wobei die Abstände der einzelnen Trays einer Gruppe zueinander bei der Übernahme der Trays von der Kettenzuführung auf die Zugkette gebildet werden. Die Anzahl der Gruppe von Trays entspricht der Anzahl von Trays, die mit einer Transportbewegung durch das Greifersystem der Schalenverschließmaschine von der Zugkette und damit von der Trayzuführung abgenommen und in eine Siegelstation übergeben werden.

Alternativ sind die Zugketten dazu konfiguriert, entlang ihres Verlaufs an mehreren Abschnitten jeweils eine Gruppe von Trays transportieren zu können, wobei die Gruppen jeweils eine gleiche Anzahl von Trays aufweisen. Besonders vorteilhaft ist dies bei einer hohen Anzahl von Trays in einer Gruppe, längeren Transportstrecken oder bei einem weiteren Füllen der Trays mit einem beispielsweisen flüssigen oder pastösen Produkt auf der Trayzuführung selbst, wobei im Falle des weiteren Füllens im Bereich der Trayzuführung wenigstens eine dritte Zugkette vorgesehen sein sollte.

Allgemein umfasst hier die Zugkette also mindestens einen Abschnitt, auf dem ein Zug, bzw. eine Gruppe von Trays aufgenommen werden kann, sowie übrige, freie Abschnitte. Sobald ein vollständiger Zug von Schalen von der Zugkette abgenommen wurde, kann diese Zugkette mit ggf. erhöhter Geschwindigkeit so vorwärts bewegt werden, dass am Anfang der Trayzuführung wieder ein Abschnitt zur Aufnahme eines neuen Zuges von Schalen bereitgestellt wird. Bei sehr langen Förderstrecken der Trayzuführung kann es vorkommen, dass die dafür erforderlichen Geschwindigkeiten der Zugketten extrem hoch würden, um rechtzeitig wieder am Ausgangspunkt einen Abschnitt zur Aufnahme eines neuen Zuges bereitstellen zu können. In diesem Fall kann es vorteilhaft sein, wenn die Zugkette entlang ihres Verlaufs mehrere Abschnitte zur Aufnahme jeweils eines Zuges von Trays aufweist. Denn dann muss die Zugkette nur jeweils um eine so kurze Distanz vorwärts bewegt werden, dass am Ausgangspunkt der Trayzuführung der nächste freie Abschnitt zur Aufnahme von Trays bereitgestellt wird.

Die Zugketten sind bevorzugt entlang einer gemeinsamen Spur überlagert vorgesehen, um die Gruppen von Trays entlang der gemeinsamen Spur nachfolgend zu transportieren. Die Spur ist dabei der Weg, entlang dessen die Trays in Transportrichtung transportiert werden. Dass die Zugketten entlang einer gemeinsamen Spur "überlagert" vorgesehen sind, bedeutet, dass der Weg, entlang dessen sich die Trays in Transportrichtung bewegen (bspw. in direkter Verlängerung eines entsprechenden Transportweges entlang der Kettenzuführung) von den Schieberelementen sämtlicher Zugketten überstrichen wird. Bspw. kann dies erreicht werden, indem jede Zugkette eine erste und eine zweite Transportkette aufweist, von denen eine in Förderrichtung rechts und die andere in Förderrichtung links seitlich neben dem von den Trays genommenen Weg angeordnet ist. Die beiden einer gemeinsamen Zugkette zugeordneten Transportketten können dabei insbesondere durch Schiebeelemente miteinander verbunden sein.

In einer vorteilhaften Ausführung ist eine Anhebevorrichtung vorgesehen, um die Trays bereitzustellen zum Weitertransport mittels eines Greifersystems einer Schalenverschließmaschine. Die Anhebevorrichtung überbrückt die Schieberelemente der Zugkette, damit die Gruppe von Trays barrierefrei mittels des Greifersystems in die Siegelstation der Schalenverschließmaschine transportiert werden kann.

Vorzugsweise umfasst eine Schalenverschließmaschine die erfindungsgemäße Trayzuführung, um die Leistung zu steigern bzw. Stillstandszeiten zu reduzieren.

Die Gruppe von Trays weist bevorzugt eine Anzahl auf, die gleich der Anzahl von Trays ist, die mittels des Greifersystems von der Trayzuführung übernommen und in die Siegelstation der Schalenverschließmaschine übergeben werden, da ein beispielsweise fehlender Tray bei der Bearbeitung in der Siegelstation zu Problemen führen kann, beispielsweise durch ein Verkleben einer Deckelfolie am Siegelwerkzeugunterteil im Bereich des fehlenden Trays.

Vorzugsweise ist eine in einer Transportrichtung stromaufwärts vor der Trayzuführung angeordnete, kontinuierlich laufende Kettenzuführung vorgesehen, von der die Trayzuführung Trays aufnimmt und dabei einen definierten Abstand zwischen den aufeinanderfolgenden Trays mittels der Schieberelemente der Zugketten erzeugt. Dabei sind die Abstände der Schieberelemente für eine Gruppe von Trays zueinander gleich und stehen in Relation mit Greifern des Greifersystems.

Vorzugsweise ist am in Transportrichtung stromabwärts befindlichen Ende der Kettenzuführung ein Sensor vorgesehen, um das Vorhandensein eines Trays vor der Übergabe an die Trayzuführung festzustellen. Dies stellt sicher, dass eine Gruppe auf einer Zugkette immer die notwendige Anzahl von Trays aufweist und kein Tray vor oder zwischen den Schieberelementen fehlt. Somit führen fehlende Trays auf der Kettenzuführung nicht zu Problemen oder Stillstandszeiten der Trayzuführung bzw. der Schalenverschließmaschine, dies erhöht die Prozesssicherheit.

Die Schalenverschließmaschine umfasst bevorzugt eine Steuerung, um den Sensor auszuwerten und die Trayzuführung zu steuern. Die Auswertung des Sensors stellt sicher, dass eine Gruppe immer ihre vorgesehene Gesamtzahl von Trays aufweist. Die Steuerung der Trayzuführung erfolgt über die Ansteuerung der einzelnen Antriebe der Zugketten, vorzugsweise Servomotoren, um die Trays mit geringen Beschleunigungsänderungen zu bewegen. Dies ermöglicht wiederum eine Erhöhung der Leistung der Verpackungsmaschine bei flüssigen oder pastösen Produkten.

Vorzugsweise umfasst die Schalenverschließmaschine eine Steuerung, mittels derer die Zugketten der Trayzuführung steuerbar sind, um unabhängig voneinander mittels der ersten Zugkette die Trays, die stromaufwärts von der Kettenzuführung bereitgestellt werden, aufzunehmen und mittels der zweiten Zugkette die Gruppe von Trays an eine Entnahmeposition zur Übernahme durch das stromabwärts vorgesehene Greifersystem zu transportieren. Sobald das Greifersystem die Trays übernommen hat und die Anhebevorrichtung in ihre Grundstellung abgesenkt wurde, fährt die zweite Zugkette die Schieberelemente vorzugsweise in kürzester Zeit zum vorderen Ende der Trayzuführung, um wiederholt ein neu ankommendes Tray von der Kettenzuführung aufzunehmen, nachdem das zuvor letzte Tray von der anderen Zugkette aufgenommen und die komplettierte Gruppe weitertransportiert wurde.

Das erfindungsgemäße Verfahren zum Betrieb einer Verpackungsanlage, die eine Schalenverschließmaschine mit der zuvor beschriebenen erfindungsgemäßen Trayzuführung und eine kontinuierlich laufende Kettenzuführung umfasst, zeichnet sich dadurch aus, dass die Trays von der Kettenzuführung an die erste Transportkette der Trayzuführung einzeln nacheinander übergeben werden, bis eine Gruppe der ersten Zugkette komplettiert ist.

Im Folgenden wird ein vorteilhaftes Ausführungsbeispiel der Erfindung anhand einer Zeichnung näher erläutert. Im Einzelnen zeigen:
- Fig. 1: in einer schematischen Draufsicht eine Verpackungsanlage mit einer erfindungsgemäßen Trayzuführung,
- Fig. 2a: die erfindungsgemäße Trayzuführung mit einer Kettenzuführung in einer schematischen Seitenansicht bei der Übernahme von Trays,
- Fig. 2b: die Trayzuführung mit einer Gruppe von Trays in einer Entnahmeposition,
- Fig. 2c: die Trayzuführung mit aktivierter Anhebevorrichtung und
- Fig. 2d: die Trayzuführung während einer Übernahme der Trays durch ein Greifersystem.

Gleiche Komponenten sind in den Figuren durchgängig mit gleichen Bezugszeichen versehen.

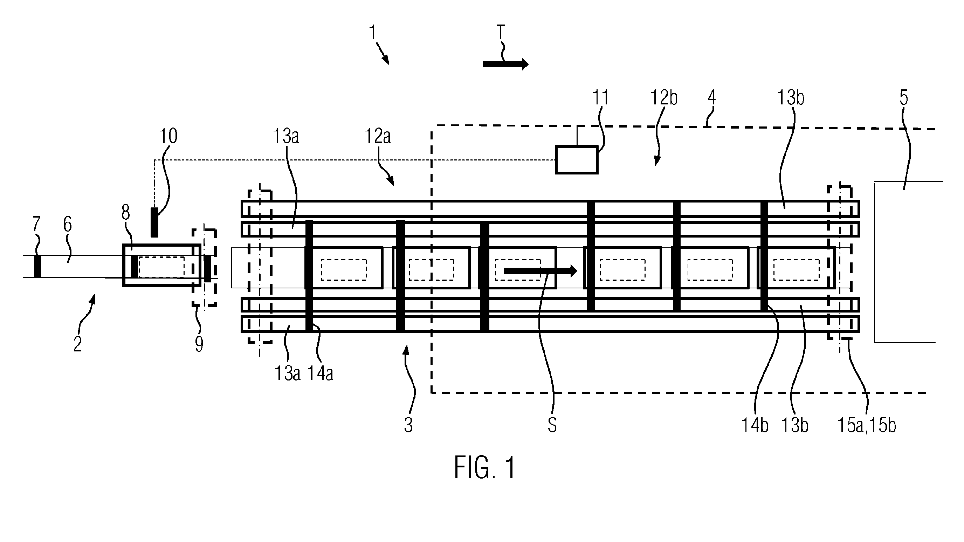

Fig. 1 zeigt eine schematische Draufsicht auf eine Verpackungsanlage 1 mit einer kontinuierlich laufenden Kettenzuführung 2, einer erfindungsgemäßen Trayzuführung 3 und einer lediglich angedeuteten Schalenverschließmaschine 4, die eine Siegelstation 5 aufweist. Die Kettenzuführung 2 umfasst eine Gliederkette 6 mit Schieberelementen 7, mittels derer mit Produkt gefüllte Trays 8 in einer Transportrichtung T der Trayzuführung 3 bereitgestellt werden. Ein Antrieb 9 ist als Servomotor ausgeführt und am Ende der Kettenzuführung 2 angebracht, um die Gliederkette 6 in einer konstanten Geschwindigkeit anzutreiben. Ein Sensor 10, der am Ende der Kettenzuführung 2 vorgesehen ist, ist dazu konfiguriert, das Vorhandensein eines Trays 8 direkt vor der Übergabe an die Trayzuführung 3 festzustellen und die Information darüber an eine Steuerung 11 weiterzuleiten.

In der Fig. 1 ist die Trayzuführung 3 in einer Ausführung gezeigt mit einer ersten 12a und einer zweiten Zugkette 12b, die jeweils zwei Transportketten 13a, 13b umfassen, an denen jeweils drei Schieberelemente 14a, 14b angebracht sind. Genauer gesagt umfasst die erste Zugkette 12a zwei Transportketten 13a, 13a, von denen eine rechts und eine links der von den Trays 8 entlang der Trayzuführung 3 genommenen Spur S angeordnet sind. Diese beiden Transportketten 13a sind mittels Schieberelementen 14a miteinander verbunden. Die drei Schieberelemente 14a definieren einen Abschnitt der ersten Zugkette 12a, der zur Aufnahme und zum Transport eines Zuges, d.h. einer Gruppe von drei Trays 8 ausgebildet ist.

Analog dazu umfasst die zweite Zugkette 12b zwei Transportketten 13b, von denen eine rechts und eine links der von den Trays genommenen Spur S entlang der Trayzuführung 3 angeordnet ist. Die beiden Transportketten 13b der zweiten Zugkette 12b sind durch drei Schieberelemente 14b miteinander verbunden. Die drei Schieberelemente 14b definieren einen Abschnitt der zweiten Zugkette 12b, der einen Zug, d.h. eine Gruppe von in diesem Fall drei Trays aufnehmen und transportieren kann. Die beiden Zugketten 12a, 12b sind damit in diesem Ausführungsbeispiel in dem Sinne "überlagert", als der von den Trays 8 entlang der Trayzuführung 8 genommene Weg, d.h. die Spur S, sowohl von den Schieberelementen 14a der ersten Zugkette 12a, als auch von den Schieberelementen 14b der zweiten Zugkette 12b überstrichen wird.

Die erste Zugkette 12a wird von einem ersten Antrieb 15a und die zweite Zugkette 12b von einem zweiten Antrieb 15b am stromabwärts gelegenen Ende der Trayzuführung 3 angetrieben, vorzugsweise mittels Servomotoren. Die Trays 8 werden entlang einer gemeinsamen Spur S in der Transportrichtung T bewegt.

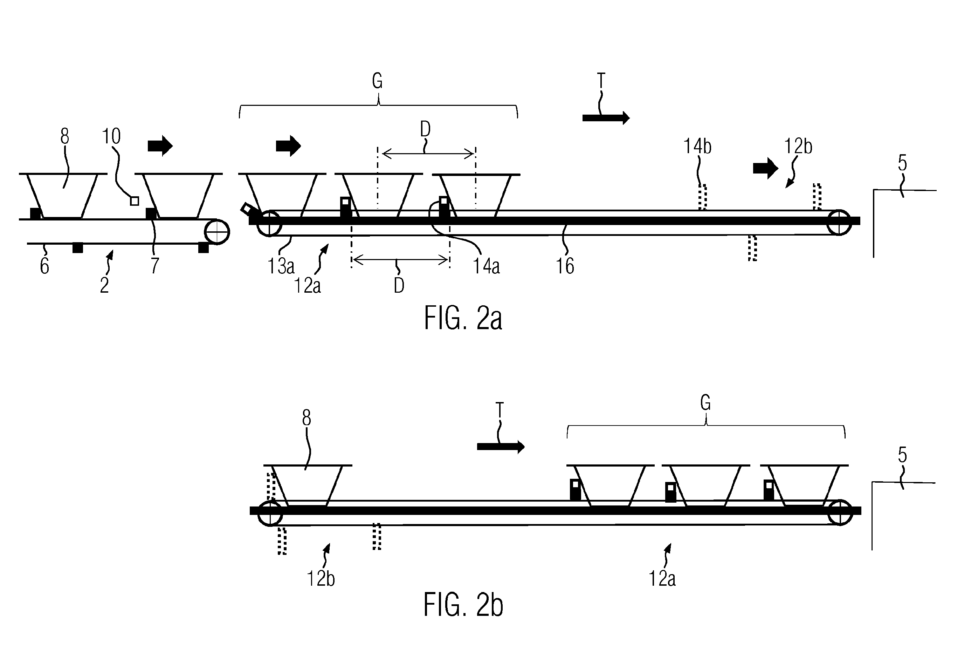

Anhand der Figuren 2a bis 2d wird der Arbeitsablauf bzw. der Transport der Trays 8 entlang der Verpackungsanlage 1 näher erläutert. Die Fig. 2a zeigt in einer schematischen Seitenansicht die Kettenzuführung 2, die die Trays 8 kontinuierlich bzw. äquidistant mit einer konstanten Geschwindigkeit in der Transportrichtung T stromabwärts an die Trayzuführung 3 herantransportiert. Mittels des Sensors 10, der in einfachster Form als Lichtschranke ausgeführt sein kann, wird das Vorhandensein eines Trays 8 zum Übergeben an die Trayzuführung 3 festgestellt. Während der Übergabe wird der zu übergebende Tray 8 über das Schieberelement 7 der Gliederkette 6 auf eine Transportauflage 16 der Trayzuführung 3 geschoben und anschließend von einem Schieberelement 14a der ersten Zugkette 12a weitertransportiert. Sollte der Sensor 10 ein Fehlen eines Trays 8 erkennen, so wartet die erste Zugkette 12a, bis die weiter kontinuierlich laufende Kettenzuführung 2 einen nächsten Tray 8 zur Übergabe bereitstellt. Über einen Abstand D zwischen zwei aufeinanderfolgenden Schieberelementen 14a der ersten Zugkette 12a wird die Lage der Trays 8 zueinander und insgesamt eine Gruppe G von in diesem Beispiel drei Trays 8 definiert. In der Fig. 2a sind auch die Schieberelemente 14b der zweiten Zugkette 12b mittels gestrichelter Linien schematisch gezeigt. Die zweite Zugkette 12b befindet sich auf dem Weg zum Anfang der Trayzuführung 3, um einen nächsten Tray 8 als Ersten einer neuen Gruppe G von der Kettenzuführung 2 zu übernehmen, ohne dass die Kettenzuführung 2 ihren kontinuierlichen Betrieb unterbrechen muss. Die Pfeile deuten die Bewegung der Gliederkette 6, der ersten 12a und zweiten Zugkette 12b an.

Im weiteren Verlauf wird auf die Darstellung der Kettenzuführung 2 verzichtet und in Fig. 2b hat die erste Zugkette 12a die Gruppe G von drei Trays 8 in eine Entnahmeposition ans Ende der Trayzuführung 3 transportiert, während die zweite Zugkette 12b weitere Trays 8 aufnimmt.

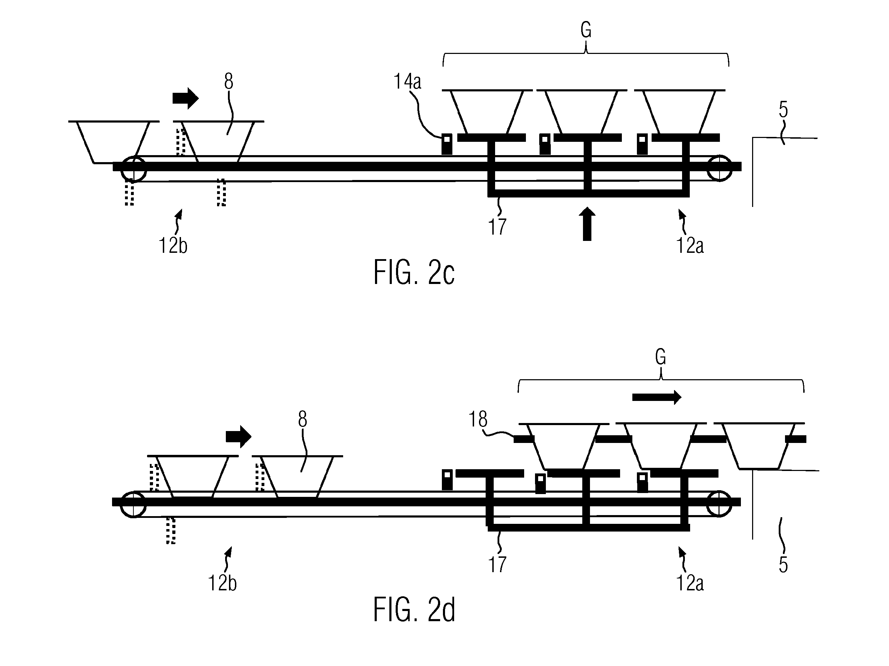

Fig. 2c zeigt eine Anhebevorrichtung 17, die dazu konfiguriert ist, die Gruppe G von Trays 8 von der Transportauflage 16 soweit nach oben anzuheben, dass der Boden der Trays 8 sich oberhalb der Schieberelemente 14a befindet. Somit kann eine Kollision der Trays 8 mit den Schieberelementen 14a während der Greiferbewegung in Richtung Siegelstation 5 verhindert werden.

In Fig. 2d sind die Trays 8 während ihrer Übergabe von der Trayzuführung 3 in die Siegelstation 5 der Schalenverschließmaschine 4 mittels eines lediglich schematisch dargestellten Greifersystems 18 dargestellt. Die zweite Zugkette 12b nimmt währenddessen weitere Trays 8 auf. In der Siegelstation 5 werden die Trays evakuiert und/oder begast oder lediglich mit einer Deckelfolie luftdicht verschlossen.

Es ist auch eine Ausführungsvariante denkbar, bei der entlang der Transportstrecke der Trayzuführung 3 eine Beladestation nach der Übernahme der Trays 8 und vor der Entnahmeposition am Ende der Trayzuführung 3 vorgesehen ist. In diesem Fall ist eine weitere dritte Zugkette vorgesehen, damit eine Gruppe G von Trays 8 beispielsweise unter einen Füller zum Befüllen mit flüssigem oder pastösen Produkt bewegt und die Trays 8 gleichzeitig oder nacheinander durch dieses weitere Produkt ergänzt und damit komplettiert werden können, bevor sie in der nachfolgenden Siegelstation 5 evakuiert und/oder begast oder lediglich mit einer Deckelfolie luftdicht versiegelt werden.

Die Kettenzuführung 2 kann statt als Gliederkette 6 mit Schieberelementen 7 auch als Gliederkettenband ausgeführt sein.

## Patentansprüche

1. Schalenverschließmaschine (4) mit einer Trayzuführung (3) zum Aufnehmen
von Trays (8) von einer kontinuierlich laufenden Kettenzuführung (2) und zum Gruppieren dieser Trays (8), **dadurch gekennzeichnet, dass** die Trayzuführung (3) wenigstens eine erste (12a) und eine zweite Zugkette (12b) mit jeweils einem eigenen Antrieb (15a, 15b) und eigenen Schieberelementen (14a, 14b), aufweist.

2. Schalenverschließmaschine nach Anspruch 1, **dadurch gekennzeichnet, dass** die Zugketten (12a, 12b) dazu konfiguriert sind, an mehreren Abschnitten jeweils eine Gruppe (G) von Trays (8) zu transportieren, wobei die Gruppen (G) jeweils eine gleiche Anzahl von Trays (8) aufweisen.

3. Schalenverschließmaschine nach einem der vorangehenden Ansprüche, **dadurch gekennzeichnet, dass** die Zugketten (12a, 12b) dazu konfiguriert sind, die Gruppen (G) von Trays (S) entlang einer gemeinsamen Spur (S) zu transportieren.

4. Schalenverschließmaschine nach einem der vorangehenden Ansprüche, **dadurch gekennzeichnet, dass** eine Anhebevorrichtung (17) vorgesehen ist, um die Trays (8) bereitzustellen zum Weitertransport mittels eines Greifersystems (18).

5. Schalenverschließmaschine nach einem der Ansprüche 2 bis 4, **dadurch gekennzeichnet, dass** eine Gruppe (G) von Trays (8) eine Anzahl aufweist, die gleich der Anzahl von Trays (8) ist, die mittels eines Greifersystems (18) von der Trayzuführung (3) übernehmbar und in eine Siegelstation (5) der Schalenverschließmaschine (4)übergebbar ist.

6. Schalenverschließmaschine nach einem der vorangehenden Ansprüche, **dadurch gekennzeichnet, dass** eine in einer Transportrichtung (T) stromaufwärts vor der Trayzuführung (3) angeordnete, kontinuierlich laufende Kettenzuführung (2) vorgesehen ist.

7. Schalenverschließmaschine nach Anspruch 6, **dadurch gekennzeichnet, dass** am in Transportrichtung (T) stromabwärts befindlichen Ende der Kettenzuführung (2) ein Sensor (10) vorgesehen ist, um das Vorhandensein eines Trays (8) vor der Übergabe an die Trayzuführung (3) festzustetten.

8. Schalenverschließmaschine nach einem der vorangehenden Ansprüche, **dadurch gekennzeichnet, dass** die Schalenverschließmaschine (4) eine Steuerung (11) umfasst, um den Sensor (10) auszuwerten und die Trayzuführung (3) entsprechend zu steuern.

9. Schalenverschließmaschine nach einem der vorangehenden Ansprüche, **dadurch gekennzeichnet, dass** die Schalenverschließmaschine (4) eine Steuerung (11) umfasst, mittels derer die Zugketten (12a, 12b) der Trayzuführung (3) so steuerbar sind, dass mittels einer ersten Zugkette (12a) eine Gruppe (G) von Trays (8), die stromaufwärts von der Kettenzuführung (2) bereitgestellt werden, aufnehmbar und unabhängig von der ersten Zugkette (12a) mittels einer zweiten Zugkette (12b) eine Gruppe (G) von Trays (8) an eine Entnahmeposition zur Übernahme durch das stromabwärts vorgesehene Greifersystem (18) transportierbar ist.

10. Verfahren zum Betrieb einer Verpackungsanlage (1), umfassend eine Schalenverschließmaschine (4) nach einem der vorangehenden Ansprüche und eine kontinuierlich laufende Kettenzuführung (2), wobei Trays (8) von der Kettenzuführung (2) an eine erste Zugkette (12a) der Trayzuführung (3) einzeln nacheinander übergeben werden, bis eine Gruppe (G) der ersten Zugkette (12a) komplettiert ist.

11. Verfahren nach Anspruch 10, wobei nach dem Komplettieren einer Gruppe (G) der ersten Zugkette (12a) diese erste Zugkette (12a) wenigstens zeitweise mit höherer Geschwindigkeit bewegt wird als eine zweite Zugkette (12b), während von der Kettenzuführung (2) an diese zweite Zugkette (12b) Trays (8) übergeben werden.

12. Verfahren nach einem der Ansprüche 10 oder 11, wobei nach der Abnahme der Gruppe (G) von Trays von einer Zugkette (12a, 12b) diese Zugkette (12a, 12b) derart bewegt wird, dass sie spätestens beim Abschuss der Aufnahme einer Gruppe (G) von Trays (8) durch eine andere Zugkette (12a, 12b) wieder zur Aufnahme weiterer Trays (8) von der Kettenzuführung (2) bereitsteht.
